(19) Europäisches Patentamt

European Patent Office

Office européen des brevets

(11) **EP 0 988 180 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **98934841.2**

(22) Anmeldetag: **02.06.1998**

(51) Int Cl.$^7$: **B60R 21/00**

(86) Internationale Anmeldenummer:
**PCT/DE98/01491**

(87) Internationale Veröffentlichungsnummer:
**WO 98/058822 (30.12.1998 Gazette 1998/52)**

(54) **VORRICHTUNG ZUM STEUERN EINES INSASSENSCHUTZMITTELS EINES KRAFTFAHRZEUGS**

DEVICE FOR CONTROLLING A PASSENGER PROTECTION DEVICE IN A MOTOR VEHICLE

DISPOSITIF POUR COMMANDER UN ELEMENT DE PROTECTION DES OCCUPANTS D'UN VEHICULE A MOTEUR

(84) Benannte Vertragsstaaten:
**DE FR GB IT**

(30) Priorität: **19.06.1997 DE 19726089**

(43) Veröffentlichungstag der Anmeldung:
**29.03.2000 Patentblatt 2000/13**

(73) Patentinhaber: **SIEMENS AKTIENGESELLSCHAFT 80333 München (DE)**

(72) Erfinder: **HERMANN, Stefan D-93096 Köfering (DE)**

(56) Entgegenhaltungen:
**EP-A- 0 427 397       EP-A- 0 709 257
WO-A-94/14638        DE-A- 4 212 421
DE-A- 4 424 551        DE-A- 19 644 975**

## Beschreibung

Die Erfindung betrifft eine Vorrichtung zum Steuern eines Insassenschutzmittels eines Kraftfahrzeugs.

Eine bekannte Vorrichtung (EP 0 156 930 A1) weist einen Beschleunigungssensor, einen Integrator und einen Schwellwertschalter sowie ein dem Insassenschutzmittel zugeordnetes Zündelement auf. Bei einem Aufprall des Fahrzeugs auf ein Hindernis wird die gemessene Beschleunigung, die bei einem Frontaufprall als Verzögerung gewöhnlich ein negatives Vorzeichen aufweist, integriert. Die integrierte Beschleunigung als Größe für den Geschwindigkeitsabbau wird mit einem Schwellwert verglichen. Bei Überschreiten des Schwellwerts durch die integrierte Beschleunigung wird das Zündelement gezündet.

Ein derart ermittelter Geschwindigkeitsabbau des Fahrzeugs infolge eines Aufpralls ist kein Maß für die mit dem Aufprall auf das Fahrzeug übertragene Energie. Der Geschwindigkeitsabbau kennzeichnet lediglich den Energieabbau zu einem bestimmten Zeitpunkt bzw ab Aufprallbeginn. Es bleibt jedoch offen, welches Maß an Energie von dem Fahrzeug noch in den nächsten Millisekunden aufgenommen werden muß. Ein für das Auslösen des Insassenschutzmittels maßgebliches Gesamtmaß der auf das Fahrzeug übertragenen Energie ist bei der bekannten Vorrichtung erst nach Aufprallende bekannt. Das Aufprallende ist jedoch ein für ein wirksames Aufblasen von Airbags zum Schutz der Insassen zu später Zeitpunkt.

In einer weiteren bekannten Vorrichtung (WO 90/03040-A) ist ein als mechanischer Deformationssensor ausgebildeter sogenannter Crashsensor in der Knautschzone des Fahrzeugs angeordnet. Der Abstand zwischen Crashsensor und Stoßstange bzw. Aufprallort ist dabei so bemessen, daß bei einer Deformation der Fahrzeugkarosserie ausgehend von der Stoßstange bzw dem Aufprallort bis hin zum Befestigungsort des Crashsensors dieser deformiert wird und das Insassenschutzmittel auslöst.

Auch bei dieser bekannten Vorrichtung kann ein heftiger, insbesondere in kurzer Zeit ein großes Maß an Energie übertragender sogenannter High-Speed-Aufprall nicht von einem langsamen, seine gewöhnlich niedrigere Energie in einer relativ großen Zeitspanne übertragenden sogenannten Low-Speed-Aufprall unterschieden werden. Zwar wird bei einem High-Speed-Aufprall die Karosserie in kurzer Zeit ausreichend verformt, so daß die Kontakte des Crashsensors schließen und der zugehörige Airbag rechtzeitig ausgelöst wird. Bei einem Low-Speed-Aufprall jedoch wird ebenfalls die Fahrzeugkarosserie derart verformt, daß der Crashsensor schließt. Die Verformung erfolgt jedoch wesentlich langsamer, so daß der Crashsensor derart spät schließt, daß der inzwischen weit vorverlagerte Insasse durch ein Auslösen des Schutzmittels eher verletzt als geschützt wird. Zudem bringt die Anordnung eines solchen Crashsensors in der Knautschzone des Fahrzeugs einen erheblichen Verkabelungsaufwand mit sich. Die Leitungen zum und vom Crashsensor sind aufgrund ihrer exponierten Führung überdies unterbrechungs- oder kurzschlußgefährdet.

Die DE 42 12 421 A1 beschreibt ein Verfahren und eine Vorrichtung zum Schutz von Fahrzeuginsassen, gemäß dem Oberbegriff des Anspruchs 1 und 6, bei dem ein für die Fahrzeuginsassen vorgesehenes Schutzmittel in Abhängigkeit von dem Ausgangssignal mindestens eines die Fahrzeugbeschleunigung erfassenden Beschleunigungssensors und unter Berücksichtigung der Sitzposition des Fahrzeuginsassen aktiviert wird, wobei nach dem Beginn eines Unfallablaufs die von der Beschleunigungseinwirkung hervorgerufene zukünftige Verlage rung des Fahrzeuginsassen und/oder seine Relativgeschwindigkeit in Bezug auf die Fahrgastzelle abgeschätzt werden und eine Aktivierung des Schutzmittel dann erfolgt, wenn die Abschätzung ergibt, dass die Schätzwerte innerhalb eines vorgebbaren zukünftigen Zeitintervalls vorgebbare Grenzwerte überschreiten. Vorzugsweise wird das Beschleunigungssensorausgangssignal einer Kalman-Filterung unterzogen.

Aufgabe der Erfindung ist es deshalb, eine Vorrichtung zu schaffen, die abhängig von der auf das Kraftfahrzeug übertragenen Energie das Insassenschutzmittel zu einem ausreichend frühen Zeitpunkt auslöst, und gleichzeitig ein nicht erwünschtes Auslösen verhindert.

Die Erfindung wird gelöst durch die Merkmale der Patentansprüche 1 und 6.

Vorteilhafte Weiterbildungen der Erfindung sind in den Unteransprüchen angegeben.

Die Erfindung, ihre Weiterbildungen und ihre Vorteile werden anhand der Zeichnungen näher erläutert. Es zeigen:

Figur 1      einen beispielhaften Beschleunigungsverlauf bei einem High-Speed-Aufprall eines Kraftfahrzeugs auf ein Hindernis,

Figur 2      ein Kraftfahrzeug mit der erfindungsgemäßen Vorrichtung,

Figur 3a    einen Verlauf eines signifaikanten Aufprallsignals,

Figur 3b    einen Verlauf eines weiteren signifikanten Aufprallsignals,

Figur 4      einen Verlauf eines signifikanten Aufprallsignals, insbesondere bei einem Referenzaufprall, und

Figur 5      den Verlauf eines signifikanten Aufprallsignals, insbesondere bei einem Aufprall während des Vorrichtungsbetriebes.

Die Erfindung beruht auf der Idee, daß sich die auf das Fahrzeug übertragene Aufprallenergie in der Schnelligkeit der Karosserieverformung wiederspiegelt. Mit Karosserieverformung sei im folgenden eine virtuelle Weggröße bezeichnet, die ein Maß für das Eindringen des Hindernisses in die Fahrzeugkarosserie, insbesondere in die Knautschzone des Fahrzeugs darstellt. Ist ein bestimmtes Maß der Karosserieverformung schnell erreicht, liegt ein High-Speed-Aufprall vor, der zu einem schnellen Auslösen des Insassenschutzmittels führen soll. Verstreicht eine relativ lange Zeitspanne bis das gleiche Maß der Karosserieverformung erreicht ist, liegt ein Low-Speed-Aufprall vor, der kein Auslösen des Insassenschutzmittels zur Folge haben soll.

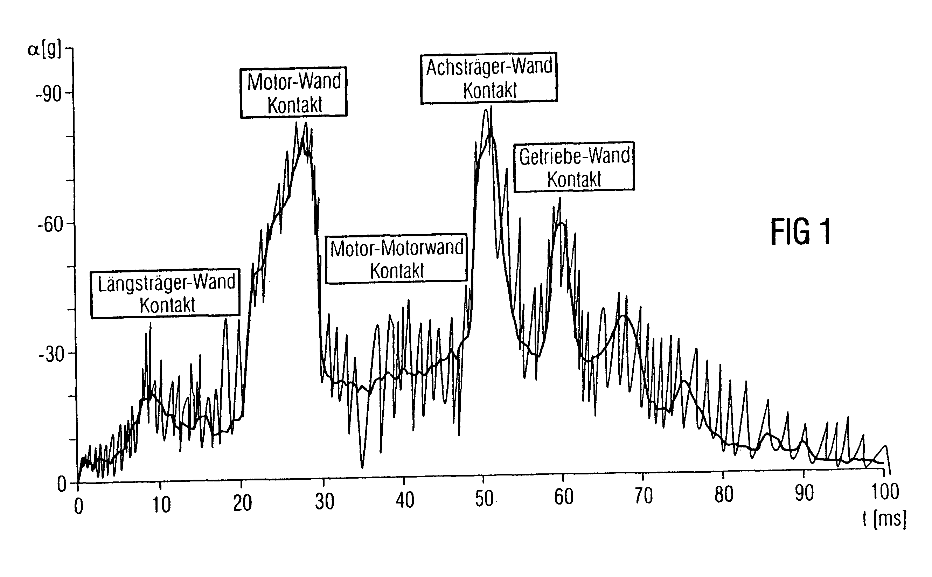

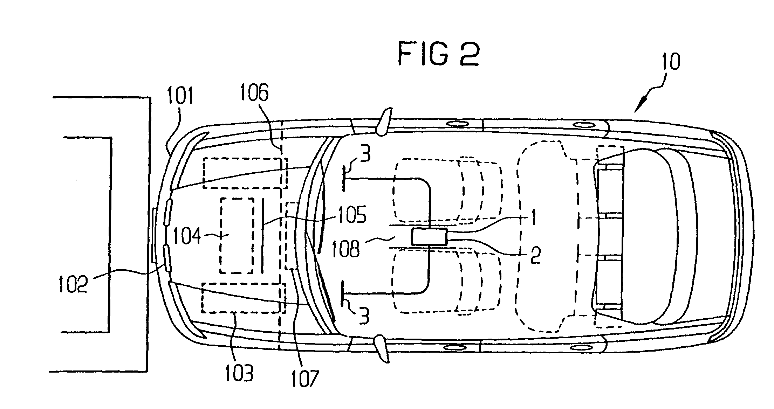

Figur 1 zeigt einen beispielhaften Beschleunigungsverlauf a(t), der als Verzögerung mit negativem Vorzeichen gekennzeichnet ist und als Einheit Vielfache der Erdbeschleunigung g aufweist, über der Zeit t in Millisekunden bei einem High-Speed-Aufprall eines Kraftfahrzeugs auf ein Hindernis. Der Zeitpunkt t=0 kennzeichnet den Aufprallbeginn. Aus dem Beschleunigungsverlauf a(t) sind neben einem extrem niederfrequenten Signalanteil, der das langsame Auf- und Abschwellen der Beschleunigung kennzeichnet, ein karosseriespezifischer Signalanteil ersichtlich, dessen Muster/ Minima in Figur druckschriftlich gekennzeichnet sind. Die Beschleunigung a(t) weist ferner hochfrequente Störsignalanteile auf. Der karosseriespezifische Signalanteil äußert sich gewöhnlich in lokalen Minima im Beschleunigungsverlauf a(t)) und geben den Kontakt von Karosseriebestandteilen mit dem Hindernis wieder. Dabei bieten in der Regel voluminöse oder starr gelagerte Karosseriebestandteile des Fahrzeugs wie Längsträger 103, Motor 104, Achsträger 106 oder Getriebe 107 (Figur 2) dem eindringenden Hindernis, - gemäß Figur 2 eine symbolisch eingezeichnete Wand - nach einer nahezu ungebremsten Beschleunigungsphase (Millisekunden vor einem Minimum in Figur 1) Widerstand (Millisekunden nach einem Minimum in Figur 1). Weniger voluminöse bzw starr gelagerte Karosseriebestandteile wie Stoßstange 101, Kühler 102 o.ä. (Figur 2) bieten dem eindringenden Hindernis weniger Widerstand, was sich in Minima mit geringeren Pegeln äußert, die im Beschleunigungsverlauf a(t) gemäß Figur 1 zum einen aufgrund des gewählten Maßstabes, zum anderen aufgrund der großen Rauschanteile im Beschleunigungssignal a(t) kaum ersichtlich sind. Der Beschleunigungsverlauf a(t) gemäß Figur 1 ist damit fahrzeugstruktur- und fahrzeugkarosserieabhängig und damit insbesondere bestimmt durch die Anordnung von Karosseriebestandteilen relativ zu einem möglichen Aufprallort, vorzugsweise der vorderen Stoßstange.

Erfindungsgemäß werden aufgenommene Beschleunigungssignale a(t) auf einzelne, sich im karosseriespezifischen Signalanteil der Beschleunigung a(t) niederschlagende Muster überprüft, die auf einen Kontakt eines bestimmten Karosseriebestandteils mit dem eindringenden Hindernis, damit auf eine bestimmte Eindringtiefe des Hindernisses ab z.B. der Stoßstange und eine bestimmte Karosseriedeformation schließen lassen. Solche Muster äußern sich gewöhnlich als lokale Minima im Beschleunigungssignal a(t). Lokale und absolute Minima aufgrund der hochfrequenten Störanteile sind dabei außer Acht gelassen.

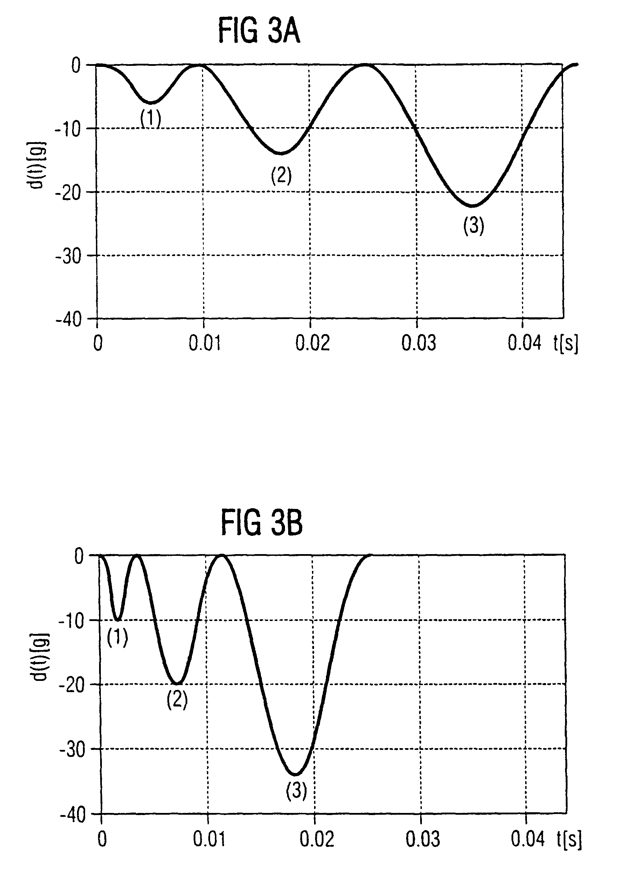

Aufgrund der hochfrequenten Störanteile sind karosseriespezifische Muster aus dem aufgezeichneten Beschleunigungssignal a(t) nicht eindeutig identifizierbar. Um solche Muster eindeutig hervorzuheben und voneinander unterscheidbar zu machen wird ein signifikantes Aufprallsignal aus der Beschleunigung a(t) gewonnen. Dazu wird vorzugsweise die durch ein Tiefpaßfilter geglättete Beschleunigung als signifikantes Aufprallsignal verwendet. In den Figuren 3a und 3b sind zwei solche beispielhafte durch Tiefpaß-Glättung der aufgenommenen Beschleunigung a(t) entstehende signifikante Aufprallsignale d(t) aufgezeichnet. Die signifikanten Aufprallsignale d(t) in Figur 3 sind in Vielfachen der Erdbeschleunigung g über der Zeit t in Sekunden aufgetragen. Die mit den Ziffern (1), (2) und (3) gekennzeichneten "Beschleunigungsberge" mit ihren lokalen Minima in den signifikanten Aufprallsignalen d(t) sind Muster für den Kontakt der Stoßstange mit dem Hindernis (1), den Kontakt des Kühlers mit dem Hindernis (2) und den Kontakt des Motorblocks mit dem Hindernis (3). Das zugrundegelegte Kraftfahrzeug unterscheidet sich also in seinem strukturellen Karosserieaufbau von dem Fahrzeug, das nach Figur 1 einen Aufprall erlitten hat: Bei dem Fahrzeug nach Figur 3 endet der Motorblock vor dem Längsträger des Kraftfahrzeugs unmittelbar hinter Kühler und Stoßstange. In Figur 1 ist der in den ersten Millisekunden ab Aufprallbeginn erfolgte Kontakt zwischen Stoßstange und Hindernis sowie Kühler und Hindernis maßstabsbegründet nicht ablesbar.

Figur 3 zeigt, daß bei einer geringeren Aufprallgeschwindigkeit v1 gemäß Figur 3a die Muster für den Kontakt zwischen Karosseriebestandteilen und Hindernis zeitlich deutlich später auftreten als bei einem Aufprall mit der größeren Aufprallgeschwindigkeit v2>v1 gemäß Figur 3b. Es ist weiterhin ersichtlich, daß die die Beträge der Minima in ihren absoluten Werten in Figur 3a geringer ausgebildet sind als in Figur 3b. Die insbesondere durch die Minima gekennzeichneten Muster (1), (2), und (3) im signifikanten Aufprallsignal d(t) geben also Aufschluß darüber, wie weit das Hindernis in die Fahrzeugkarosserie zu bestimmten Zeitpunkten t eingedrungen ist. Wird nun ein solches charakteristisches Muster von einem die Beschleunigung a(t) auswertenden Auswerter 2 (Figur 2) erkannt und zudem der Zeitpunkt berücksichtigt, zu dem das charakteristische Muster auftritt, so kann auf die Stärke des Aufpralls, die Aufprallgeschwindigkeit, die beim Aufprall übertragene Energie rückgeschlossen werden.

Um solche Muster im Beschleunigungsverlauf noch deutlicher hervorzuheben und somit die karosseriestrukturspezifischen Muster im Beschleunigungssignal voneinander deutlich unterscheidbar zu machen, wird vorzugsweise das Beschleunigungssignal a(t) oder das bereits gefilterte Beschleunigungssignal mit einer Korrelationsfunktion k(t) korreliert. Die Korrelation liefert ein signifikantes Aufprallsignal d(t), in dem die zu erkennenden karosseriestrukturspezifischen Muster stärker herausbildet sind, bei dem die Muster ein ggf verändertes, größeres Amplitudenverhältnis zueinander aufweisen als im Beschleunigungssignal und damit ein großer Signal-Rausch-Abstand gewährleistet ist.

Da die zu erkennenden Muster im Beschleunigungssignal $a_R(t)$ in etwa glockenförmig ausgebildet sind, ist als Korrelationsfunktion k(t) eine Glockenfunktion vorgesehen, die Minima in der Beschleunigung a(t) überproportional verstärkt:

$$k(t) = -\cos(\omega \bullet t) - 1, \quad \text{für } t = \left[-\frac{1}{\omega} \, ; \, \frac{1}{\omega}\right]$$

Eine solche Korrelation der Beschleunigung a(t) mit dieser Korrelationsfunktion k(t) entspricht einer Faltung der beiden Signale a(t) und k(t), da die glockenförmige Korrelationsfunktion k(t) symmetrisch ausgebildet ist. Für eine im Rechner des Auswerters 2 durchgeführte Korrelation mit einer Abtastfrequenz von 2 kHz, d. h. $k = \frac{t}{0,5ms}$, ergibt sich als signifikante Aufprallgröße d(t):

$$d_R(k) \;=\; k(k) \bullet a(k) \;=\; \sum_{\kappa = 0}^{k} \Big(k(\kappa) \bullet a(k - \kappa)\Big).$$

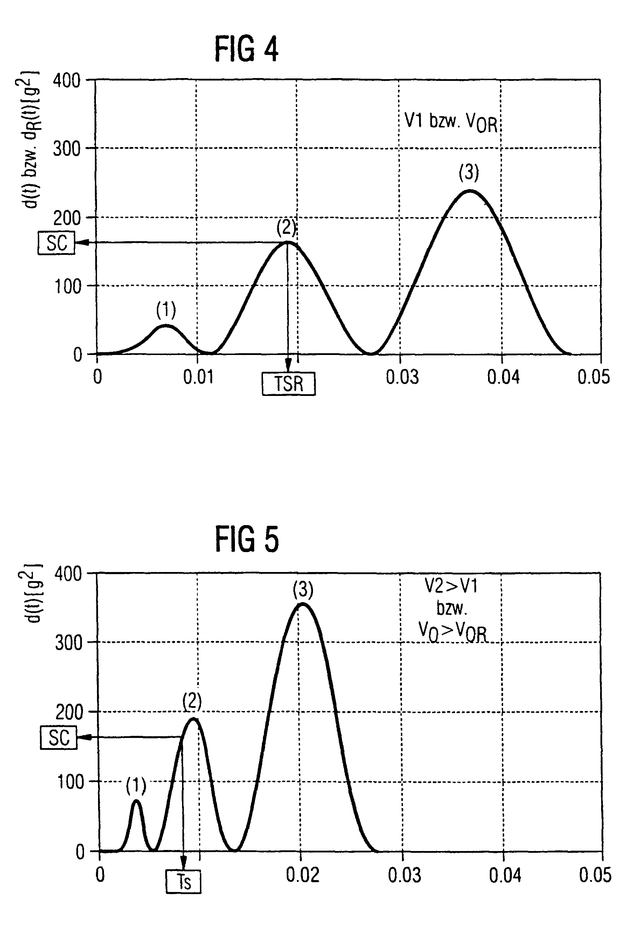

Derart ermittelte signifikante Aufprallgrößen d(t) mit der Einheit Erdbeschleunigung $g^2$ über der Zeit t in Sekunden sind bei unterschiedlichen Aufprallgeschwindigkeiten v2>v1 in den Figuren 4 und 5 gezeigt. Zu berücksichtigen ist in jedem Fall die durch die zeitliche "Breite" der Glockenkurve k(t) - also deren Streuung - hervorgerufene Wirkung: Wird die Beschleunigung a(t) mit einer glockenförmigen Korrelationsfunktion k(t) mit einer geringen Streuung korreliert, so ist der Zeitversatz aufgrund der Korrelation zwischen Beschleunigung a(t) und signifikantem Aufprallsignal d(t) gering, was für ein rechtzeitiges Auslösen von Vorteil ist; die durch die Korrelation verursachte Filterwirkung ist jedoch verhältnismäßig gering: Die Unterscheidbarkeit der Muster kann darunter leiden. Wird die Beschleunigung a(t) jedoch mit einer glockenförmigen Korrelationsfunktion k(t) mit einer großen Streuung korreliert, so ist der Zeitversatz aufgrund der Korrelation zwischen Beschleunigung a(t) und signifikantem Aufprallsignal d(t) groß, die Filterwirkung jedoch hervorragend. Bei geeigneter Einstellung der Streuung der Korrelationsfunktion k(t) kann ein der Korrelation vorangestelltes Tiefpaßfilter gänzlich entfallen.

Beispielsweise ist die signifikante Aufprallgröße d(t) in Figur 4 aus der als gefilterte Beschleunigung ausgebildeten signifikanten Aufprallgröße d(t) aus Figur 3a durch Korrelation mit einer Glockenkurve k(t) abgeleitet. Entsprechender Zusammenhang gilt beispielsweise für die Figuren 5 und 3b. Die in Figur 3 mit Ziffern (1) bis (3) gekennzeichneten Muster/Minima sind aufgrund der Korrelation in den Figur 4 und 5 nun auch in ihrer Amplitude deutlich voneinander unterscheidbar.

Aus einem derart bestimmten signifikanten Aufprallsignal d(t) wird im folgenden versucht, ein eine bestimmte Karosserieverformung darstellendes Muster zu erkennen. Aufgrund der deutlichen Unterscheidbarkeit der Muster (1), (2), und (3) kann die Mustererkennung durch einen Schwellwertvergleich erfolgen. Übersteigt das signifikante Aufprallsignal d(t) aus Figur 5 zum ersten Mal ab Aufprallbeginn den Schwellwert SC, so gilt dasjenige Muster (2) erkannt, das für den Kontakt zwischen Hindernis und Kühler des Fahrzeugs steht. Hierbei sei das signifikante Aufprallsignal d(t) immer als Größe mit positivem Wertebereich angenommen. Weiter wird ein Zeitpunkt $T_s$ ermittelt, zu dem das signifikante Aufprallsignal d(t) das Muster (2) erkannt hat. Im folgenden wird das Insassenschutzmittel, vorzugsweise ein Fahrer- oder Beifahrerairbag, ein Gurtstrammer o.ä. ausgelöst, wenn der derart ermittelte Zeitpunkt $T_s$ einen vorgegebenen Wert, eben einen Referenz-Zeitpunkt $T_{sR}$ unterschreitet. Die Zeitpunkte beziehen sich immer auf den Aufprallbeginn, der als solcher angesehen wird, wenn die Beschleunigung a(t) einen Mindestbeschleunigungswert überschreitet.

Der Referenz-Zeitpunkt $T_{sR}$ wird durch Referenz-Crashes in sogenannten Crashtests ermittelt. Dabei werden karosseriestrukturgleiche Kraftfahrzeuge mit unterschiedlichen Aufprallgeschwindigkeiten gegen ein Hindernis gefahren. Zur Ermittlung des Referenz-Zeitpunktes $T_{sR}$ ist insbesondere ein Referenz-Aufprall mit einer Referenz-Aufprallgeschwindigkeit $v_{0R}$ von Bedeutung, bei der das Insassenschutzmittel gerade noch ausgelöst werden soll. Bei einem solchen Referenz-Aufprall wird eine Referenz-Beschleunigung $a_R(t)$ gemessen und analog zur Bewertung der Beschleunigung a(t) mit derselben, insbesondere glockenförmigen Korrelationsfunktion k(t) zu einem signifikanten Referenz-Aufprallsignal $d_R(t)$ weitergebildet.

Im folgenden zeige Figur 4 das signifikante Referenz-Aufprallsignal $d_R(t)$ bei einem Referenz-Aufprall mit der Referenz-Aufprallgeschwindigkeit $v_{0R}$ = v1, Figur 5 dagegen ein Aufprallsignal d(t), ermittelt bei einem Aufprall im Fahrbetrieb des mit der erfindungsgemäßen Vorrichtung ausgestatteten Kraftfahrzeugs, mit der zunächst unbekannten Aufprallgeschwindigkeit $v_0$ = v2.

Aus dem signifikanten Referenz-Aufprallsignal $d_R(t)$ bei der Referenz-Aufprallgeschwindigkeit $v_{0R}$ gemäß Figur 4, bei der gerade soviel Energie übertragen wird, daß ein Airbag noch ausgelöst werden soll, wird nun dasjenige Muster ausgewählt, das zum einen im signifikanten Referenz-Aufprallsignal $d_R(t)$ derart frühzeitig erkannt wird, sodaß ein zu diesem Zeitpunkt ausgelöster Airbag den Insassen noch wirksam schützt und nicht durch sein Aufblasen gefährdet. Das Muster (3) gemäß Figur 4, der Motorblock-Hindernis-Kontakt, ist zwar in seiner Amplitude deutlicher unterscheidbar von den anderen Mustern (1) und (2) als alle anderen Muster (1) und (2) und würde sich somit vorzüglich zu einer Mustererkennung durch einen einfachen Schwellwertvergleich eignen; allerdings wird das Muster (3) erst zu einem späten Zeitpunkt ab Aufprallbeginn erkannt, der gewöhnlich für ein Auslösen des Insassenschutzmittels zu spät ist. Andererseits ist das Muster nach der Maßgabe auszuwählen, daß es eindeutig erkennbar und unterscheidbar von anderen Mustern ist. Beispielsweise ist das erste Muster (1) in Figur 4 zu niedrig ausgebildet, da es nicht nur durch einen Kontakt "Stoßstange - Hindernis" hervorgerufen werden könnte sondern auch z.B. durch das Durchfahren eines Schlagloches. Beispielhaft wird bei vorliegendem Kraftfahrzeugtyp das Muster (2) "Kontakt zwischen Kühler und eindringendem Hindernis" im signifikanten Referenz-Aufprallsignal $d_R(t)$ als geeignet ausgewählt. Die Auswahl besagt, daß bei der bekannten Referenz-Aufprallgeschwindigkeit $v_{0R}$ zum Referenz-Zeitpunkt $T_{sR}$ das Hindernis soweit um in die Fahrzeugkarosserie eingedrungen ist, daß es den Kühler berührt. Daraus folgt, daß im Fahrzeugbetrieb der erfindungsgemäßen Vorrichtung bei einem Aufprall, bei dem das signifikante Aufprallsignal d(t) in gleicher Weise aus der Beschleunigung a(t) gebildet wird wie das signifikante Aufprallsignal $d_R(t)$ aus der Referenz-Beschleunigung $a_R(t)$, und bei dem das Muster (2) nach derselben Maßgabe wie bei dem Referenz-Aufprall erkannt wird - hier durch Vergleich mit dem Schwellwert SC - , der ermittelte Zeitpunkt $T_s$ mit dem vorab ermittelten Referenz-Zeitpunkt $T_{sR}$ verglichen werden kann, und daraus auf die Aufprallgeschwindigkeit $v_0$ des Fahrzeugs geschlossen werden kann. Ist der Zeitpunkt $T_s$ kleiner oder gleich als der Referenz-Zeitpunkt $T_{sR}$, so liegt eine Aufprallgeschwindigkeit $v_0$ größer als die Referenz-Aufprallgeschwindigkeit $v_{oR}$ vor. Ist der Zeitpunkt $T_s$ größer als der Referenz-Zeitpunkt $T_{sR}$, so liegt eine Aufprallgeschwindigkeit $v_0$ kleiner der Referenz-Aufprallgeschwindigkeit $v_{0R}$ vor. Aufgrund der Wahl der Referenz-Aufprallgeschwindigkeit $v_{0R}$ als Grenzmaß wird in ersterem Fall das Insassenschutzmittel ausgelöst, in letzterem Fall nicht.

Die Aufprallgeschwindigkeit wiederum ist im Gegensatz zu dem aus dem Stand der Technik bekannten und aus dem Beschleunigungssignal durch Integration abgeleiteten Geschwindigkeitsabbau eine Größe, die direkt für die auf das Kraftfahrzeug übertragene Energie steht. Die Aufprallgeschwindigkeit kann nicht alleine aus einer gemessenen Beschleunigung abgeleitet werden. Zum anderen kann die Aufprallgeschwindigkeit auch nicht von dem Tachometerstand des Kraftfahrzeugs abgeleitet werden, da diese Geschwindigkeitsmesser lediglich die Absolutgeschwindigkeit des Kraftfahrzeugs wiedergibt, nicht jedoch die Aufprallgeschwindigkeit, die sich aus Absolutgeschwindigkeit des Fahrzeugs und der Geschwindigkeit des Aufprallhindernisses richtungsabhängig additiv zusammensetzt. Allein die auf das Kraftfahrzeug übertragene Gesamtenergie, für die der ermittelte Zeitpunkt $T_s$ ein Maß ist, läßt jedoch eine Unterscheidung zwischen einem das Insassenschutzmittel auszulösenden Aufprall und einem das Insassenschutzmittel nicht auszulösenden Aufpralls bei gleichzeitigem frühen Zündzeitpunkt zu.

Anstelle eines Vergleichs von Zeitpunkt $T_s$ und Referenzzeitpunkt $T_{sR}$ kann erfindungsgemäß bei einem Aufprall auch auf die Aufprallgeschwindigkeit $V_0$ zurückgerechnet werden. Auch hier muß jedoch auf die Daten eines Referenz-Aufpralls zurückgegriffen werden, zu denen die bei einem realen Aufprall ermittelten Daten ins Verhältnis gesetzt werden. Vorzugsweise sind Referenz-Aufprall und das signifikante Muster im signifikanten Referenz-Aufprallsignal der Referenz-Aufpralls ebenfalls nach oben erwähnten Gesichtspunkten auszuwählen, wie auch für die Ermittlung des signifikanten Referenz-Aufprallsignals aus der Referenz-Beschleunigung das zuvor Gesagte anzuwenden ist.

Allgemein berechnet sich eine Geschwindigkeit zu einem Zeitpunkt t nach folgender Gleichung:

$$v(t) = v_0 + \int_0^t a(t) \bullet dt \qquad (1)$$

Bei einem Aufprall eines Kraftfahrzeugs setzt sich die Momentangeschwindigkeit v(t) des Kraftfahrzeugs aus der Aufprallgeschwindigkeit $v_0$ zuzüglich der von Aufprallbeginn t = 0 bis zum Zeitpunkt t integrierten, mittels des Beschleunigungsaufnehmers aufgenommenen Beschleunigung a(t) zusammen. Der Startzeitpunkt t=0 ist gewöhnlich ein Zeitpunkt, in dem die gemessene Beschleunigung a(t) einen Mindestbeschleunigungswert, z.B. 5g, überschreitet. Die Momentangeschwindigkeit v(t) kann sowohl als Fahrzeuggeschwindigkeit zum Zeitpunkt t als auch als Eindringgeschwindigkeit des Hindernisses in die Fahrzeugkarosserie interpretiert werden.

Die Kinematik besagt, daß der zurückgelegte Weg, der bei einem obengenannten Aufprall insbesondere als zurückgelegter Weg des in die Fahrzeugkarosserie eindringenden Hindernisses ab Aufprallort interpretiert wird, sich aus Gleichung (1) wie folgt berechnet:

$$ s(t) = \int_0^t v(t) \bullet dt = s_0 + v_0 \bullet t + \int_0^t \int_0^t a(t) \bullet dt^2 \qquad (2) $$

Vor Inbetriebnahme der erfindungsgemäßen Vorrichtung wird also mit Hilfe der Gleichung (2) eine sogenannte Referenz-Karosserieverformung $s_R$ für einen Referenz-Crash ermittelt, bei dem gerade noch das Insassenschutzmittel ausgelöst werden soll. Die Referenz-Karosserieverformung $s_R$ ist dabei die Verformung, die sich bis zu dem Zeitpunkt, im folgenden Referenz-Zeitpunkt $T_{sR}$ einstellt, zu dem das signifikante Muster im signifikanten Referenz-Aufprallsignal $d_R(t)$ erkannt wird.

Die Referenz-Karosserieverformung $s_R$ hängt von der bekannten Referenz-Aufprallgeschwindigkeit $v_{0R}$ multipliziert mit dem Referenz-Zeitpunkt $T_{sR}$ ab und dem Verlauf des signifikanten Referenz-Aufprallsignals $d_R(t)$ bis zum Referenz-Zeitpunkt $T_{sR}$, welcher seinerseits vorzugsweise durch ein Überschreiten des Schwellwerts durch das signifikante Referenz-Aufprallsignal bestimmt ist. Die Karosserie sei vor dem Aufprall nicht verformt war ($s_0 = 0$):

$$ s_R = s_{T_{sR}} = s_0 + v_{0R} \bullet T_{sR} + \int_0^{T_{sR}} \int_0^{T_{sR}} d_R(t) \bullet dt^2 \qquad (3) $$

Die Referenz-Karosserieverformung $s_R$ als virtuelle Weggröße mit einer virtuellen Einheit ist in einem Speicher des Auswerters 2 der erfindungsgemäßen Vorrichtung abgelegt und wird bei den folgend erläuterten Auslöseberechnungen während des Betriebs der erfindungsgemäßen Vorrichtung im Fahrzeug herangezogen.

Die das Maß für die auf das Fahrzeug übertragene Aufprallenergie darstellende Aufprallgeschwindigkeit $v_0$ des Fahrzeugs wird durch Auflösen der Gleichung (2) nach der Aufprallgeschwindigkeit $v_0$ berechnet:

$$ v_0 = \frac{s_R}{T_s} - \int_0^{T_s} \int_0^{T_s} a(t) \bullet \frac{\left| dt^2 \right|}{T_s} \qquad (4) $$

Dabei wird die vom Beschleunigungssensor aufgenommene Fahrzeugbeschleunigung $a(t)$ zur eindeutigen Mustererkennung mit der Korrelationsfunktion $k(t)$ zu einem signifikanten Aufprallsignal $d(t)$ korreliert, wobei die Korrelationsfunktion $k(t)$ für die Beschleunigung $a(t)$ und die vorab ausgewertete Referenz-Beschleunigung $a_R(t)$ gleich ist. Figur 5 zeigt beispielhaft eine solches signifikantes Aufprallsignal $d(t)$ mit einer zu berechnenden Aufprallgeschwindigkeit $v_0$, die größer ist als die Referenz-Aufprallgeschwindigkeit $v_{0R}$.

Zur Erkennung des Musters (2), bezüglich dessen beim Referenz-Aufprall auch die Referenz-Karosserieverformung $s_R$ ermittelt wurde wird das signifikante Aufprallsignal $d(t)$ im folgenden mit dem Schwellwert SC verglichen. Gemäß Figur 5 überschreitet die dynamische Größe $d(t)$ den verformungssignifikanten Schwellwert SC zum Zeitpunkt $T_s$. Zu diesem Zeitpunkt $T_s$, der aufgrund der höheren Aufprallgeschwindigkeit $v_0$ gegenüber der Referenz-Aufprallgeschwindigkeit $v_{0R}$ kleiner ist als der Referenz-Zeitpunkt $T_{sR}$, ist das Hindernis in etwa bis zum Kühler des Fahrzeugs in dessen Karosserie eingedrungen. Für die vormals variable Karosserieverformung $s(t)$ aus Gleichung (2) kann deshalb die mit Gleichung (3) ermittelte Referenz-Karosserieverformung $s_R$ eingesetzt werden, sofern als Zeitgröße t in Gleichung (4) der Zeitpunkt $T_s$ eingesetzt wird. Der Zählerterm aus Gleichung 4 entspricht also alleine der aufprallgeschwindigkeitsabhängigen Karosserieverformung $s_{v0}$ zum Zeitpunkt $T_s$.

Übersteigt die derart ermittelte Aufprallgeschwindigkeit $v_0$ einen Grenzwert GR, so wird das Insassenschutzmittel ausgelöst. Ist der Referenz-Aufprall wie oben hinsichtlich einer Refrenz-Aufprallgeschwindigkeit $v_{0R}$ ausgewählt, bei der gerade noch ausgelöst werden soll, so entspricht der Grenzwert GR dieser Referenz- Aufprallgeschwindigkeit $v_{0R}$.

Vorteile der Erfindung liegen insbesondere darin, daß ein notwendiges Auslösen des Insassenschutzmittels frühzeitig eingeleitet werden kann, ein zu spätes Auslölsen jedoch verhindert wird. Das auf das Kraftfahrzeug übertragene Maß an Energie ist für die Auslöseentscheidung maßgebend. Es sind keine ausgelagerten Sensoren, insbesondere im Motorraum erforderlich. Die Anzahl der Crashtests kann verringert werden, da aus zwei beliebigen zu einem Kraftfahrzeugtyp gehörenden Referenz-Aufpralldatensätzen bei unterschiedlichen Refernz-Aufprallgeschwindigkeiten durch Interpolation weitere zu anderen Aufprallgeschwindigkeiten gehörende Datensätze auf Basis der signifikanten Referenz-Aufprallsignale gewonnen werden können.

Es versteht sich, daß zahlreiche Abänderungen möglich sind:

Die Erfindung wird vorzugsweise zum Erkennen eines Front- oder Schrägaufpralls eingesetzt. Dabei nimmt der Beschleunigungssensor vorwiegend Fahrzeugbeschleunigungen parallel zur Fahrzeuglängsachse auf. Der Beschleunigungssensor ist dabei gemäß Figur 2 vorzugsweise zusammen mit dem Auswerter in einem zentral im Fahrzeug - zum Beispiel am Fahrzeugtunnel 108 - angeordneten Steuergerät untergebracht, so daß der Leitungsaufwand zu ausgelagerten Sensoren entfallen kann. Das Steuergerät ist über Leitungen mit Zündpillen 3 der zugehörigen Insassenschutzmittel verbunden.

Der Schwellwert SC kann auch zeitlich variabel ausgebildet sein: Vorzugsweise nimmt der Schwellwert SC (t) zu frühen Zeitpunkten nach Aufprallbeginn größere Werte an als zu späteren Zeitpunkten ab Aufprallbeginn. Vorzugsweise können an stelle eines Schwellwerts Sollcodesignal zwei Schwellwerte zur Mustererkennung maßgebend sein, wobei ein Muster als erkannt gilt, wenn das erste, niedrigere Schwellwert von dem signifikanten Aufprallsignal d (t) überschritten ist und das signifikante Aufprallsignal d(t) über dieser niedrigeren Schwelle ein Maximum aufweist. Alternativ gilt ein Muster als erkannt, wenn der zweite höhere Schwellwert von dem signifikanten Aufprallsignal d(t) überschritten wird. Auf diese Art und Weise können bestimmte Aufprallarten wie z.B. ein Pfahlaufprall schneller erkannt werden.

Vorzugsweise wird bei Vorliegen der vorgenannten Bedingungen das Insassenschutzmittel direkt ausgelöst. In einer weiteren vorteilhaften Weiterbildung dient jedoch die Ermittlung der Aufprallgeschwindigkeit $V_0$ oder des Zeitpunktes $T_s$ und der Vergleich mit dem Grenzwert GR bzw dem Referenz-Zeitpunkt $T_{sR}$ als sogenannte Safing-Funktion: Dabei wird ein Aufprall zusätzlich mit anderen Mitteln bewertet, z.B. mit einem weiteren Beschleunigungssensor oder mit einem Crashsensor oder aber auch mit einem weiteren Auswerter oder mit einem weiteren Auslösealgorithmus. Diese weiteren Mittel liefern ein Auslösesignal. Ein derart gebildetes Auslösesignal wird UNDverknüpft mit dem von der erfindungsgemäßen Vorrichtung erzeugten Auslösesignal, im folgenden Safing-Signal: Lediglich wenn beide Signale vorliegen wird das Insassenschutzmittel ausgelöst. Gewöhnlich sind die Parameter der erfindungsgemäßen Vorrichtung dann derart bemessen, z.B. die Vergleichswerte GR und $T_{sR}$ niedrig angesetzt, daß mit dem Safing-Signal ein Zeitfenster geschaffen wird, in dem das Auslösesignal zum bestmöglichen Auslösezeitpunkt plaziert kann.

**Patentansprüche**

1. Vorrichtung zum Steuern eines Insassenschutzmittels eines Kraftfahrzeugs,

   - mit einem Beschleunigungssensor (1), und
   - mit einem Auswerter (2) für die gemessene Beschleunigung (a(t)),

   **dadurch gekennzeichnet,**

   - **dass** der Auswerter (2) ein signifikantes Aufprallsignal (d(t)) durch Korrelation der Beschleunigung (a(t)) mit einer als Glockenkurve ausgebildeten Korrelationsfunktion (k(t)) erzeugt, so dass ein karosseriestrukturspezifischer Signalanteil der Beschleunigung (a(t)) im signifikanten Aufprallsignal (d(t)) hervorgehoben ist,
   - **dass** der Auswerter (2) das signifikante Aufprallsignal (d(t)) auf ein Muster ((1),(2),(3)) überprüft, und
   - **dass** der Auswerter (2) ein Auslösen des Insassenschutzmittels zumindest abhängig von einem Zeitpunkt ab Aufprallbeginn ($T_s$) einleitet, zu dem das Muster ((1),(2),(3)) im signifikanten Aufprallsignal (d(t)) erkannt wird und der ermittelte Zeitpunkt ($T_s$) kleiner ist als ein Referenz-Zeitpunkt ($T_{sR}$).

2. Steuervorrichtung nach Anspruch 1, **dadurch gekennzeichnet, dass** der Auswerter (2) das Muster ((1),(2),(3)) im signifikanten Aufprallsignal (d(t)) erkennt, wenn das signifikante Aufprallsignal (d(t)) einen Schwellwert (SC) überschreitet.

3. Steuervorrichtung nach Anspruch 1 oder 2, **dadurch gekennzeichnet, dass** der Referenz-Zeitpunkt ($T_{sR}$) in einem nichtflüchtigen Speicher des Auswerters (2) abgelegt ist und bestimmt ist durch das Erkennen des Musters ((1), (2),(3)) im signifikanten Referenz-Aufprallsignal ($d_R(t)$), das aus einer bei einem Referenz-Aufprall gemessenen Referenz-Beschleunigung ($a_R(t)$) derart abgeleitet ist, dass ein karosseriestrukturspezifischer Signalanteil der Referenz-Beschleunigung ($a_R(t)$) im signifikanten Referenz-Aufprallsignal ($d_R(t)$) hervorgehoben ist.

4. Steuervorrichtung nach Anspruch 3, **dadurch gekennzeichnet, dass** das Muster ((1),(2),(3)) erkannt wird, wenn der Schwellwert (SC) durch das signifikante Referenz-Aufprallsignal ($d_R(t)$) überschritten wird.

5. Steuervorrichtung nach Anspruch 3 oder Anspruch 4, **dadurch gekennzeichnet, dass** zur Ermittlung des Referenz-Zeitpunktes ($T_{sR}$) ein Referenz-Aufprall mit einer Referenz-Aufprallgeschwindigkeit ($v_{0R}$) zugrundegelegt wird, die gerade noch zu einem Auslösen des Insassenschutzmittels führen soll.

6. Vorrichtung zum Steuern eines Insassenschutzmittels eines Kraftfahrzeugs,

   - mit einem Beschleunigungssensor (1), und
   - mit einem Auswerter (2) für die gemessene Beschleunigung ($a(t)$),
   - wobei der Auswerter (2) ein signifikantes Aufprallsignal ($d(t)$) derart aus der Beschleunigung ($a(t)$) ableitet, dass ein karosseriestrukturspezifischer Signalanteil der Beschleunigung ($a(t)$) im signifikanten Aufprallsignal ($d(t)$) hervorgehoben ist,
   - wobei der Auswerter (2) das signifikante Aufprallsignal ($d(t)$) auf ein Muster ((1),(2),(3)) überprüft, und
   - wobei der Auswerter (2) ein Auslösen des Insassenschutzmittels zumindest abhängig von einem Zeitpunkt ab Aufprallbeginn ($T_s$) einleitet, zu dem das Muster ((1),(2),(3)) im signifikanten Aufprallsignal ($d(t)$) erkannt wird,

   **dadurch gekennzeichnet,**

   - **dass** das Auslösen des Insassenschutzmittels durch den Auswerter (2) eingeleitet wird, wenn eine von dem ermittelten Zeitpunkt ($T_s$), von dem Verlauf des signifikanten Aufprallsignals ($d(t)$) bis zu diesem Zeitpunkt ($T_s$) und von einer Referenz-Karosserieverformung ($s_R$) bestimmte Aufprallgeschwindigkeit ($v_0$) einen Grenzwert (GR) überschreitet.

7. Steuervorrichtung nach Anspruch 6, **dadurch gekennzeichnet, dass** der Auswerter (2) das Muster ((1),(2),(3)) im signifikanten Aufprallsignal ($d(t)$) erkennt, wenn das signifikante Aufprallsignal ($d(t)$) einen Schwellwert (SC) überschreitet.

8. Steuervorrichtung nach Anspruch 6, **dadurch gekennzeichnet, dass** das signifikante Aufprallsignal ($d(t)$) durch Korrelation der Beschleunigung ($a(t)$) mit einer Korrelationsfunktion ($k(t)$) erzeugt wird.

9. Steuervorrichtung nach Anspruch 8, **dadurch gekennzeichnet, dass** die Korrelationsfunktion ($k(t)$) als Glockenkurve ausgebildet ist.

10. Steuervorrichtung nach einem der Ansprüche 6 bis 9, **dadurch gekennzeichnet, dass** die Referenz-Karosserieverformung ($s_R$) in einem nichtflüchtigen Speicher des Auswerters (2) abgelegt ist und bestimmt ist durch ein signifikantes Referenz-Aufprallsignal ($d_R(t)$), das aus einer bei einem Referenz-Aufprall gemessenen Referenz-Beschleunigung ($a_R(t)$) derart abgeleitet ist, daß ein karosseriestrukturspezifischer Signalanteil der Referenz-Beschleunigung ($a_R(t)$) im signifikanten Referenz-Aufprallsignal ($d_R(t)$) hervorgehoben ist.

11. Steuervorrichtung nach Anspruch 10, **dadurch gekennzeichnet, dass** die Referenz-Karosserieverformung ($s_R$) abhängig ist von einem ersten Referenz-Verformungsanteil ($s_{v0R}$), der durch einen Referenz-Zeitpunkt ($T_{sR}$) und eine Referenz-Aufprallgeschwindigkeit ($v_{0R}$) bestimmt ist, und von einem zweiten Referenz-Verformungsanteil ($s_{aR}$), der durch das bis zum Referenz-Zeitpunkt ($T_{sR}$) berücksichtigte Referenz-Aufprallsignal ($d_R(t)$) bestimmt ist, wobei der Referenz-Zeitpunkt ($T_{sR}$) bestimmt ist durch das Erkennen des Musters ((1),(2),(3)) im signifikanten Referenz-Aufprallsignal ($d_R(t)$).

12. Steuervorrichtung nach Anspruch 11, **dadurch gekennzeichnet, dass** der Referenz-Zeitpunkt ($T_{sR}$) bestimmt ist durch das Überschreiten des Schwellwerts (SC) durch das signifikante Referenz-Aufprallsignal ($d_R(t)$).

**13.** Steuervorrichtung nach einem der Ansprüche 6 bis 11, **dadurch gekennzeichnet, dass** die Aufprallgeschwindigkeit ($v_0$) bestimmt ist durch einen aufprallgeschwindigkeitsabhängigen Verformungsanteil ($s_{v0}$) bis zum ermittelten Zeitpunkt ($T_s$), dividiert durch den ermittelten Zeitpunkt ($T_s$).

**14.** Steuervorrichtung nach Anspruch 13, **dadurch gekennzeichnet, dass** der aufprallgeschwindigkeitsabhängige Verformungsanteil ($s_{v0}$) ermittelt wird durch eine Änderung der Referenz-Karosserieverformung ($s_R$) durch einen durch das signifikante Aufprallsignal (d(t)) bestimmten und bis zum ermittelten Zeitpunkt ($T_s$) berücksichtigten Verformungsanteil ($s_a$).

**15.** Steuervorrichtung nach einem der Ansprüche 7 bis 14, **dadurch gekennzeichnet, dass** zur Ermittlung des Referenz-Zeitpunktes ($T_{sR}$) ein Referenz-Aufprall mit einer Referenz-Aufprallgeschwindigkeit ($v_{0R}$) zugrundegelegt wird, die gerade noch zu einem Auslösen des Insassenschutzmittels führen soll.

**16.** Steuervorrichtung nach Anspruch 3 oder nach Anspruch 11, **dadurch gekennzeichnet, dass** das signifikante Referenz-Aufprallsignal ($d_R(t)$) durch Korrelation der Referenz-Beschleunigung ($a_R(t)$) mit der Korrelationsfunktion (k(t)) erzeugt wird.

**Claims**

**1.** Arrangement for controlling an occupant protection device of a motor vehicle,

- having an acceleration sensor (1), and
- having an evaluator (2) for the measured acceleration (a(t)),

**characterised in that**

- the evaluator (2) produces a significant impact signal (d(t)) by correlation of the acceleration (a(t)) using a correlation function (k(t)) in the form of a bell curve, so that a vehicle-body-structure-specific signal component of the acceleration (a(t)) is accentuated in the significant impact signal (d(t)),
- the evaluator (2) checks the significant impact signal (d(t)) for a pattern((1), (2), (3)), and
- the evaluator (2) initiates triggering of the occupant protection device as a function of at least one instant from the start of impact ($T_s$) at which the pattern ((1), (2), (3)) in the significant impact signal (d(t)) is recognised and the instant ($T_s$) determined is smaller than the reference instant ($T_{sR}$).

**2.** Control arrangement according to Claim 1, **characterised in that** the evaluator (2) recognises the pattern ((1), (2), (3)) in the significant impact signal (d(t)) if the significant impact signal (d(t)) exceeds a threshold value (SC).

**3.** Control arrangement according to Claim 1 or 2, **characterised in that** the reference instant ($T_{sR}$) is stored in a non-volatile memory of the evaluator (2) and is determined by recognition of the pattern ((1), (2), (3)) in the significant reference impact signal ($d_R(t)$) which is derived from a reference acceleration ($a_R(t)$) measured for a reference impact in such a way that a vehicle-body-structure-specific signal component of the reference acceleration ($a_R(t)$) is accentuated in the significant reference impact signal ($d_R(t)$).

**4.** Control arrangement according to Claim 3, **characterised in that** the pattern ((1), (2), (3)) is recognised if the threshold value (SC) is exceeded by the significant reference impact signal ($d_R(t)$).

**5.** Control arrangement according to Claim 3 or Claim 4, **characterised in that** the calculation of the reference instant ($T_{sR}$) is based on a reference impact having a reference impact velocity ($v_{0R}$) which is just enough to trigger the occupant protection device.

**6.** Arrangement for controlling an occupant protection device of a motor vehicle,

- having an acceleration sensor (1), and
- having an evaluator (2) for the measured acceleration (a(t)),
- the evaluator (2) producing a significant impact signal (d(t)) derived from the acceleration (a(t)) in such a way that a vehicle-body-structure-specific signal component of the acceleration (a(t)) is accentuated in the significant impact signal (d(t)),

- the evaluator (2) checking the significant impact signal (d(t)) for a pattern((1), (2), (3)), and
- the evaluator (2) initiating deployment of the occupant protection device as a function of at least one instant from the start of impact ($T_s$) at which the pattern ((1), (2), (3)) in the significant impact signal (d(t)) is recognised,

**characterised in that**

- triggering of the occupant protection device by the evaluator (2) is initiated if an impact velocity ($v_0$) determined by the determined instant ($T_s$), by the response of the significant impact signal (d(t)) up to this instant ($T_s$) and by a reference vehicle body deformation ($s_R$) exceeds a limit value (GR).

7. Control arrangement according to Claim 6, **characterised in that** the evaluator (2) recognises the pattern ((1), (2), (3)) in the significant impact signal (d(t)) if the significant impact signal (d(t)) exceeds a threshold value (SC).

8. Control arrangement according to Claim 6, **characterised in that** the significant impact signal (d(t)) is produced by correlation of the acceleration (a(t)) using a correlation function (k(t)).

9. Control arrangement according to Claim 8, **characterised in that** the correlation function (k(t)) is in the form of a bell curve.

10. Control arrangement according to one of Claims 6 to 9, **characterised in that** the reference vehicle body deformation ($s_R$) is stored in a non-volatile memory of the evaluator (2) and is determined by a significant reference impact signal ($d_R$(t)) which is derived from a reference acceleration ($a_R$(t)) measured for a reference impact in such a way that a vehicle-body-structure-specific signal component of the reference acceleration ($a_R$(t)) is accentuated in the significant reference impact signal ($d_R$(t)).

11. Control arrangement according to Claim 10, **characterised in that** the reference vehicle body deformation ($s_R$) is dependent on a first reference deformation component ($s_{v0R}$) which is determined by a reference instant ($T_{sR}$) and reference impact velocity ($v_{0R}$), and by a second reference deformation component ($S_{aR}$) which is determined by the reference impact signal (dR(t)) taken into account up to reference instant ($T_{sR}$), the reference instant ($T_{sR}$) being determined by recognition of the pattern ((1), (2), (3)) in the significant reference impact signal (dR(t)),

12. Control arrangement according to Claim 11, **characterised in that** the reference instant ($T_{sR}$) is determined by exceedance of the threshold value (SC) by the significant reference impact signal ($d_R$(t)).

13. Control arrangement according to one of Claims 6 to 11, **characterised in that** the impact velocity ($v_0$) is determined by an impact-velocity-dependent deformation component ($s_{v0}$) up to the determined instant ($T_s$), divided by the determined instant ($T_s$).

14. Control arrangement according to Claim 13, **characterised in that** the impact-velocity-dependent deformation component ($s_{v0}$) is determined by a change in the reference vehicle body deformation ($S_R$) caused by a deformation component ($s_a$) determined by the significant impact signal (d(t)) and taken into account up to the determined instant ($T_s$).

15. Control arrangement according to one of Claims 7 to 14, **characterised in that** determination of the reference instant ($T_{sR}$) is based on a reference impact having a reference impact velocity ($v_{0R}$) that is just sufficient to trigger the occupant protection device.

16. Control arrangement according to Claim 3 or according to Claim 11, **characterised in that** the significant reference impact signal ($d_R$(t)) is produced by correlation of the reference acceleration ($a_R$(t)) using the correlation function (k(t)).

**Revendications**

1. Dispositif de commande d'un moyen de protection des passagers d'un véhicule automobile

   - comprenant un accéléromètre (1) et
   - comprenant un analyseur (2) pour l'accélération mesurée (a(t)),

**caractérisé en ce**

- **que** l'analyseur (2) génère un signal de collision significatif (d(t)) par corrélation de l'accélération (a(t)) avec une fonction de corrélation (k(t)) en forme de cloche de manière à mettre en évidence dans le signal de collision significatif (d(t)) une composante du signal d'accélération (a(t)) spécifique à la structure de la carrosserie,
- **que** l'analyseur (2) vérifie si le signal de collision significatif (d(t)) comporte un modèle ((1), (2), (3)) et
- **que** l'analyseur (2) initie un déclenchement du moyen de protection des passagers au moins en fonction d'un moment à partir du début de la collision ($T_s$) auquel le modèle ((1), (2), (3)) est détecté dans le signal de collision significatif (d(t)) et où le moment déterminé ($T_s$) est inférieur à un moment de référence ($T_{sR}$).

2. Dispositif de commande selon la revendication 1, **caractérisé en ce que** l'analyseur (2) détecte le modèle ((1), (2), (3)) dans le signal de collision significatif (d(t)) lorsque le signal de collision significatif (d(t)) dépasse une valeur de seuil (SC).

3. Dispositif de commande selon la revendication 1 ou 2, **caractérisé en ce que** le moment de référence ($T_{sR}$) est enregistré dans une mémoire non volatile de l'analyseur (2) et déterminé par la détection du modèle ((1), (2), (3)) dans le signal de collision de référence significatif ($d_R(t)$) qui est dérivé d'une accélération de référence ($a_R(t)$) mesurée lors d'une collision de référence de manière à mettre en valeur une composante de signal de l'accélération de référence ($a_R(t)$) spécifique à la structure de la carrosserie dans le signal de collision de référence significatif ($d_R(t)$).

4. Dispositif de commande selon la revendication 3, **caractérisé en ce que** le modèle ((1), (2), (3)) est détecté lorsque la valeur de seuil (SC) est dépassée par le signal de collision de référence significatif ($d_R(t)$).

5. Dispositif de commande selon la revendication 3 ou la revendication 4, **caractérisé en ce que** le moment de référence ($T_{sR}$) se base sur une collision de référence à une vitesse de collision de référence ($v_{oR}$) qui doit encore tout juste provoquer un déclenchement du moyen de protection des passagers.

6. Dispositif de commande d'un moyen de protection des passagers d'un véhicule automobile

- comprenant un accéléromètre (1) et
- comprenant un analyseur (2) pour l'accélération mesurée (a(t)),
- l'analyseur (2) dérivant un signal de collision significatif (d(t)) de l'accélération (a(t)) de manière à mettre en évidence dans le signal de collision significatif (d(t)) une composante du signal d'accélération (a(t)) spécifique à la structure de la carrosserie,
- l'analyseur (2) vérifiant si le signal de collision significatif (d(t)) comporte un modèle ((1), (2), (3)) et
- l'analyseur (2) initiant un déclenchement du moyen de protection des passagers au moins en fonction d'un moment à partir du début de la collision ($T_s$) auquel le modèle ((1), (2), (3)) est détecté dans le signal de collision significatif (d(t))

**caractérisé en ce**

- **que** le déclenchement du moyen de protection des passagers par l'analyseur (2) est initié lorsqu'une vitesse de collision ($v_o$) déterminée à partir du moment déterminé ($T_s$), de l'évolution du signal de collision significatif (d(t)) jusqu'à ce moment ($T_s$) et d'une déformation de référence de la carrosserie ($s_R$) dépasse une valeur de seuil (GR).

7. Dispositif de commande selon la revendication 6, **caractérisé en ce que** l'analyseur (2) détecte le modèle ((1), (2), (3)) dans le signal de collision significatif (d(t)) lorsque le signal de collision significatif (d(t)) dépasse une valeur de seuil (SC).

8. Dispositif de commande selon la revendication 6, **caractérisé en ce que** le signal de collision significatif (d(t)) est généré par corrélation de l'accélération (a(t)) avec une fonction de corrélation (k(t)).

9. Dispositif de commande selon la revendication 8, **caractérisé en ce que** la fonction de corrélation (k(t)) est en forme de cloche.

10. Dispositif de commande selon l'une des revendications 6 à 9, **caractérisé en ce que** la déformation de référence de la carrosserie ($s_R$) est enregistrée dans une mémoire non volatile de l'analyseur (2) et déterminée par un signal de collision de référence significatif ($d_R(t)$) qui est dérivé d'une accélération de référence ($a_R(t)$) mesurée lors d'une collision de référence de manière à mettre en valeur une composante de signal de l'accélération de référence ($a_R(t)$) spécifique à la structure de la carrosserie dans le signal de collision de référence significatif ($d_R(t)$).

11. Dispositif de commande selon la revendication 10, **caractérisé en ce que** la déformation de référence de la carrosserie ($s_R$) dépend d'une première composante de déformation de référence ($s_{voR}$) qui est déterminée par un moment de référence ($T_{sR}$) et une vitesse de collision de référence ($v_{oR}$) et par une deuxième composante de déformation de référence ($s_{aR}$) qui est déterminée par le signal de collision de référence ($d_R(t)$) pris en compte jusqu'au moment de référence ($T_{sR}$), le moment de référence ($T_{sR}$) étant déterminé par la détection du modèle ((1), (2), (3)) dans le signal de collision de référence significatif ($d_R(t)$).

12. Dispositif de commande selon la revendication 11, **caractérisé en ce que** le moment de référence ($T_{sR}$) est déterminé par le dépassement de la valeur de seuil (SC) par le signal de collision de référence significatif ($d_R(t)$).

13. Dispositif de commande selon l'une des revendications 6 à 11, **caractérisé en ce que** la vitesse de collision ($v_o$) est déterminée par une composante de déformation dépendante de la vitesse de collision ($s_{vo}$) jusqu'au moment déterminé ($T_s$), divisée par le moment déterminé ($T_s$).

14. Dispositif de commande selon la revendication 13, **caractérisé en ce que** la composante de déformation dépendante de la vitesse de collision ($s_{vo}$) est déterminée par une modification de la déformation de référence de la carrosserie ($s_R$) par une composante de déformation ($s_a$) déterminée par le signal de collision significatif ($d(t)$) et prise en compte jusqu'au moment déterminé ($T_s$).

15. Dispositif de commande selon l'une des revendications 7 à 14, **caractérisé en ce que** la détermination du moment de référence ($T_{sR}$) se base sur une collision de référence à une vitesse de collision de référence ($v_{oR}$) qui doit encore tout juste provoquer un déclenchement du moyen de protection des passagers.

16. Dispositif de commande selon la revendication 3 ou selon la revendication 11, **caractérisé en ce que** le signal de collision de référence significatif ($d_R(t)$) est produit par la corrélation de l'accélération de référence ($a_R(t)$) avec la fonction de corrélation ($k(t)$).

FIG 1

EP 0 988 180 B1

# FIG 2

# FIG 3A

# FIG 3B

## FIG 4

## FIG 5